Europäisches Patentamt

European Patent Office

Office européen des brevets

(19)

(11) Veröffentlichungsnummer: **0 250 698**
A2

## (12) EUROPÄISCHE PATENTANMELDUNG

(21) Anmeldenummer: 87100396.8

(22) Anmeldetag: 14.01.87

(51) Int. Cl.⁴: **H04L 11/16** , G06F 13/36 ,
B60R 16/02

(30) Priorität: 24.06.86 DE 3621105

(43) Veröffentlichungstag der Anmeldung:
07.01.88 Patentblatt 88/01

(84) Benannte Vertragsstaaten:
**DE FR GB IT NL**

(71) Anmelder: **VDO Adolf Schindling AG**
**Gräfstrasse 103**
**D-6000 Frankfurt/Main(DE)**

(72) Erfinder: **Helmstädter, Gerald**
**Jahnstrasse 43**
**D-6103 Griesheim(DE)**
Erfinder: **Ohm, Heinz-Friedrich**
**Franz-Seliger-Strasse 8**
**D-6108 Weiterstadt(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Verfahren zur Übertragung von Informationen zwischen selbständigen Teilnehmern eines Systems über eine serielle Schnittstelle und Anordung zur Durchführung des Verfahrens.

(57) Gegenstand der Erfindung ist ein Verfahren zur digitalen Übertragung von Informationen zwischen selbständigen Teilnehmern eines Systems über eine serielle Schnittstelle mindestens eines Teilnehmers (2). Einem Teilnehmer (3), dem ein Vorrang vor anderen Teilnehmern (4) zugeordnet ist, gibt für den Zugriff zu der Schnittstelle (5) ein Vorrangsignal (11) aus, das einen von zwei Pegeln (7, 8) erzeugt, die jeweils einer der beiden binären Wertigkeiten zugeordnet sind. Das Vorrangsignal (11) herrscht an der Schnittstelle (5) für eine Zeitdauer ($t_3$), die gleich lang oder länger als eine bei der Übertragung zwischen den anderen Teilnehmern durch Wechsel der Pegel vorgegebene Zeitdauer ($t_2$) ist.

FIG. 5

## Verfahren zur Übertragung von Informationen zwischen selbständigen Teilnehmern eines Systems über eine serielle Schnittstelle und Anordnung zur Durchführung des Verfahrens

Die Erfindung bezieht sich auf ein Verfahren zur digitalen Übertragung von Informationen zwischen selbständigen Teilnehmern eines Systems über eine serielle Schnittstelle mindestens eines Teilnehmers.

Schnittstellen sind Verbindungs-bzw. Nahtstellen zwischen selbständigen Teilnehmern eines datenverarbeitenden Systems. Festlegungen über die Eigenschaften solcher Schnittstellen erleichtern den Anschluß von Teilnehmern, die in bezug auf die Signalpegel und die Signalbedeutung gleich sind, jedoch unterschiedlich aufgebaut sein können. Daher ist es möglich, unterschiedliche Teilnehmer anzuschließen oder Teilnehmer verschiedener Hersteller zu verwenden bzw. auszutauschen. Schnittstellen werden durch die physikalischen Eigenschaften der Verbindungsleitungen zwischen den Teilnehmern und durch die auf den Leitungen übertragungen Signale sowie deren Bedeutung definiert. Weiterhin werden noch die Orte, an denen die Schnittstellen auf einfache Weise unterbrochen werden können, festgelegt. Beispielsweise werden die Steckerbelegungen von Steckverbindern genormt.

Der Erfindung liegt die Aufgabe zugrunde, ein Verfahren zur digitalen Übertragung von Informationen zwischen selbständigen Teilnehmern eines Systems über eine serielle Schnittstelle zu entwickeln, bei dem ein Teilnehmer mit einer Priorität Zugang zur Schnittstelle erhält.

Die Aufgabe wird erfindungsgemäß dadurch gelöst, daß ein Teilnehmer, dem ein Vorrang vor anderen Teilnehmern zugeordnet ist, für den Zugriff zu der Schnittstelle ein Vorrangsignal ausgibt, das einen von zwei Pegeln, denen jeweils eine der beiden binären Wertigkeiten zugeordnet ist, an der Schnittstelle für eine Zeitdauer erzeugt, die gleich lang oder länger als eine Zeitdauer zwischen zwei definierten Signalpegeln ist, die je in gesonderten, aufeinanderfolgenden Übertragungen zwischen den anderen Teilnehmern auftreten.

Dieses Verfahren ermöglicht einen Verbindungsaufbau nach Prioritäten über wenige Ein-und Ausgänge an den Teilnehmern. Entsprechend gering ist auch die Anzahl der Leitungen zwischen den Teilnehmern. Der gerätetechnische Aufwand läßt sich daher vermindern. Es können unterschiedliche Übertragungsverfahren zwischen den Teilnehmern angewendet werden.

Vorzugsweise erfolgt die Übertragung zwischen den oder dem nicht dem Vorrang zugeordneten Teilnehmern zu der seriallen Schnittstelle synchron in Telegrammen oder Datenblöcken, die jeweils mindestens einen Wechsel der den binären Wertigkeiten zugeordneten Pegel aufweisen. Durch die synchrone Datenübertragung wird der Übertragungskanal gut ausgenutzt. Bei einer bevorzugten Ausführungsform enthalten die Telegramme oder Datenblöcke mindestens ein ungeradzahliges Paritätsbit. Bei ungestörtem Betrieb ist damit gewährleistet, daß in jedem Block oder in jedem Telegramm mindestens einmal ohne besonderen zusätzlichen Aufwand innerhalb einer der Dauer des Vorrangsignals entsprechenden Zeit die Pegel wechseln. Wenn ein Vorrangsignal vorhanden ist, wird der Pegelwechsel unterbunden. Das Ausbleiben eines Pegelwechsels weist auf ein Vorrangsignal hin.

Bei einer anderen bevorzugten Ausführungsform ist vorgesehen, daß der Teilnehmer, dem der Vorrang zugeordnet ist, asynchrone Datentelegramme über die serielle Schnittstelle empfängt oder an diese sendet. Die serielle Schnittstelle kann vorteilhafterweise als asynchrone Diagnoseschnittstelle und synchrone Schnittstelle zu externen Einheiten ausgebildet sein.

Eine Schaltungsanordnung zur Durchführung der oben beschriebenen Verfahren besteht erfindungsgemäß darin, daß die Schnittstelle oder ein mit dieser verbundener Teilnehmer ein von Wechseln der Pegel, die den beiden binären Wertigkeiten zugeordnet sind, anstoßbares Zeitglied enthält, das nach Ablauf einer einstellbaren Zeitdauer anspricht und den Teilnehmer auf die Verbindung mit demjenigen Teilnehmer umschaltet, dem der Vorrang zugeordnet ist. Mit geringem Aufwand läßt sich bei dieser Anordnung ein Vorrangsignal feststellen. Vorzugsweise ist der mit der seriellen Schnittstelle verbundene Teilnehmer nach Beendigung der Datenübertragung mit demjenigen Teilnehmer, dem der Vorrang zugeordnet ist, selbsttätig auf die Datenübertragung mit mindestens einem anderen Teilnehmer umschaltbar. Wenn keine asynchrone Datenübertragung zwischen der seriellen Schnittstelle und dem vorrangigen Teilnehmer stattfindet, werden bei dieser Anordnung Daten synchron zu den anderen Teilnehmern übertragen.

Bei einer bevorzugten Ausführungsform ist dem Vorrangsignal ein aktiver Pegel zugeordnet. Unter aktivem Pegel ist hierbei ein durch eine relativ niederohmige Verbindung zwischen einem Pol einer Spannungsquelle und der seriellen Schnittstelle erzeugter Pegel zu verstehen. Dieser Pegel wird der Schnittstelle daher unabhängig von den Ausgangssignalen der übrigen Teilnehmer aufgeprägt. Als aktiver Pegel wird vorzugsweise Nullpotential verwendet. Dieses wird vorzugsweise über einen Schalttransistor dem Übertragungskanal und damit der Schnittstelle zugeführt. Der Aufwand für die Erzeugung eines dem Vorrangsignal entsprechenden Pegels ist daher gering.

Weitere Einzelheiten, Vorteile und Merkmale der Erfindung ergeben sich nicht nur aus den Ansprüchen und denen diesen für sich und/oder in Kombination entnehmbaren Merkmalen, sondern auch aus der folgenden Beschreibung eines in einer Zeichnung dargestellten Ausführungsbeispiels.

Es zeigen:

Fig. 1 ein Zeitdiagramm von auf einem Übertragungskanal zwischen Teilnehmern und einer seriellen Schnittstelle synchron übertragenen, binären Signalen,

Fig. 2 ein Zeitdiagramme von auf einem Übertragungskanal zwischen Teilnehmern und einer seriellen Schnittstelle bei einem asynchronen Zugriff durch einen prioritätshöheren Teilnehmer übertragenen Signalen,

Fig. 3 ein Zeitdiagramm mit synchron übertragenen Signalen und einem asynchronen Vorrangsignal unter Bezug auf die längste Zeit, die vom Beginn des Vorrangsignals bis zu dessen Erkennung vergeht,

Fig. 4 ein Zeitdiagramm mit synchron übertragenen Signalen und einem asynchronen Vorrangsignal unter Bezug auf die kürzeste Zeit, die vom Beginn des Vorrangsignals bis zu dessen Erkennung vergeht und

Fig. 5 ein Schaltbild einer Anordnung zur Übertragung von Informationen zwischen Teilnehmern mit seriellen Schnittstellen zu einem Übertragungskanal.

An einen seriellen Übertragungskanal (1) sind mindestens drei selbständige Teilnehmer (2, 3, 4) angeschlossenen, zwischen denen digital Informationen seriell übertragen werden können. Die Teilnehmer (2, 3, 4) bilden mit dem Übertragungskanal (1) ein datenverarbeitendes System, das vorzugsweise in einem Kraftfahrzeug angeordnet ist, um Daten zwischen einer zentralen Einheit und extern angeordneten elektronischen Geräten zu übertragen. Der Übertragungskanal (1) besteht vorzugsweise aus zwei elektrischen Leitern. Damit lassen sich eine Vielzahl paralleler elektrischer Leitungen einsparen. Der Teilnehmer (2) hat im System zentrale Funktionen. Es kann sich um einen Rechner, z.B. einen Mikrorechner, handeln, der Daten von den Teilnehmern (3, 4) empfängt und an diese Daten aussendet. Der Übertragungskanal (1) ist deshalb für direktionalen Betrieb ausgebildet.

Die Teilnehmer (2, 3, 4) sind je über Schnittstellen (5, 10, 12) mit dem Übertragungskanal (1) verbunden. Die Schnittstellen (5, 10, 12) sind für die Ausgabe und den Empfang von binären Signalen ausgebildet. Ein hoher (high) Pegel und ein niedriger (low) Pegel sind den beiden binären Wertigkeiten "0" und "1" zugeordnet. Diese beiden Signalarten werden auf dem Kanal (1) übertragen. Die Teilnehmer (2, 3, 4) enthalten mit dem Übertragungskanal (1) über die jeweiligen Schnittstellen (5, 12, 13) verbundene Sender-und Empfangsschaltungen. Hierbei sind vorzugsweise nicht dargestellte einheitliche Steckverbinder für den Anschluß der Teilnehmer (2, 3, 4) an den Übertragungskanal (1) vorgesehen.

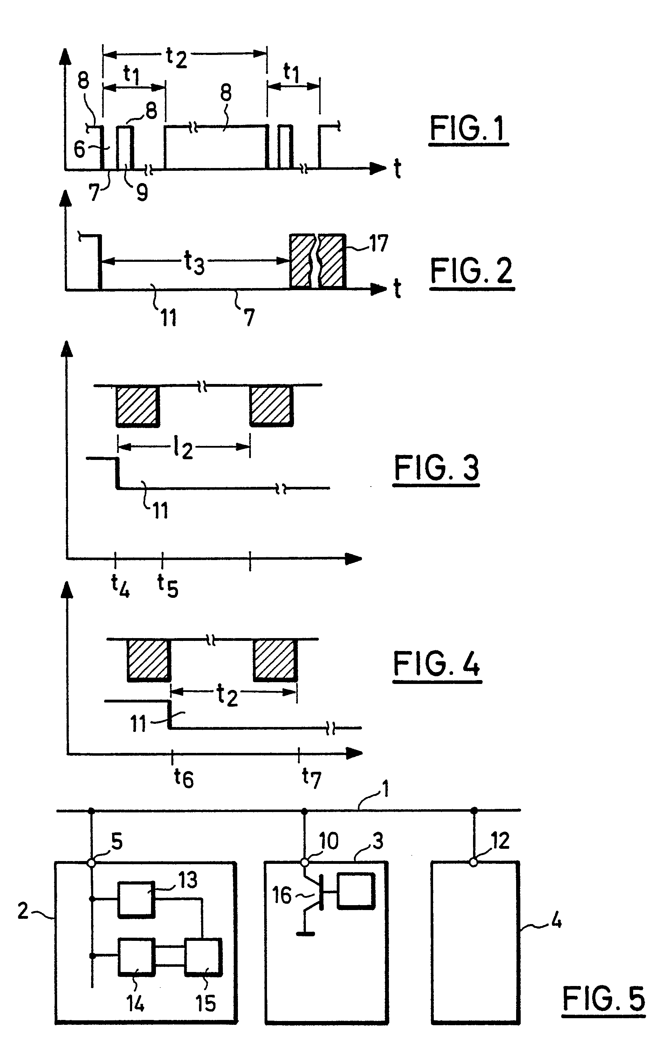

Zwischen den Teilnehmern (3, 4) besteht eine Rangordnung bezüglich des Zugriffs zum Teilnehmer (2). Der Teilnehmer (3) hat eine höhere Priorität. Zwischen den Teilnehmern (2, 4) werden Informationen digital und synchron übertragen. Beispielsweise werden Telegramme oder Datenblöcke übertragen. Ein solches Telegramm ist in Fig. 1 dargestellt, in der in Abszissenrichtung die Zeit (t) und in Ordinatenrichtung die Signalpegel aufgetragen sind. Das Telegramm beginnt vorzugsweise mit einem Signal (6), das einen niedrigen Pegel (7) hat, der z.B. O-Potential entspricht. Das Telegramm hat eine mit (t₂) bezeichnete Dauer, die im Millisekundenbereich liegt. Wenn keine Datenübertragung vorliegt, herrscht auf dem Übertragungskanal (1) ein hoher Pegel (8). Das synchrone Übertragungstelegramm enthält jeweils wenigstens ein Signal (9) mit einem hohen Pegel (8), der innerhalb einer Zeitdauer (t₁) auftritt. Vorzugsweise enthalten die Übertragungstelegramme ungerade Paritätsbits, so daß sichergestellt wird, daß in jedem Übertragungstelegramm Wechsel zwischen hohen und niedrigen Signalpegeln auftreten. Ein synchrones Übertragungstelegramm beginnt zweckmäßigerweise mit einem Startzyklus, der die Dauer (t₁) hat, die kleiner als (t₂) ist und enthält die Signale (6, 9), zwischen denen Pegelwechsel stattfinden.

Der Teilnehmer (3) erzeugt bedarfsweise asynchron ein Vorrangsignal (11), das in Fig. 2 gezeigt ist, in der in Abszissenrichtung die Zeit (t) und in Ordinatenrichtung die Signalpegel dargestellt sind. Das zu Beginn der asynchronen Übertragung erzeugte Vorrangsignal (11) hat einen niedrigen Pegel (7), bei dem es sich um einen aktiven Pegel handelt, d.h. es besteht eine niederohmige Verbindung zwischen der seriellen Schnittstelle (5) und einer Potentialquelle im Teilnehmer (3) über einen Sender (16), bei dem es sich z.B. um einen Schalttransistor handeln kann. Vorzugsweise bewirkt das Vorrangsignal (11) das Auftreten von Nullpotential auf dem Übertragungskanal (1) und an der Schnittstelle (5). Die Dauer des Vorrangsignals (11) ist vorgegeben. Es handelt sich um eine Mindestdauer (t₃), die gleich oder größer als die Dauer (t₂) des synchronen Übertragungstelegramms ist. Im Anschluß an das Vorrangsignal (11) werden Signale übertragen, die in Fig. 2 schematisch mit (17) bezeichnet sind. Es kann sich dabei um Daten handeln, die vom Teilnehmer (3) zum Teilnehmer (2) oder umgekehrt bzw. in abwechselnden Richtungen übertragen werden. Das Ende des asynchronen Übertragungstelegramms wird über ein entsprechenden codiertes Signal oder eine Signalkombination dem Teilnehmer (2) gemeldet.

In der Schnittstelle (5) oder im Teilnehmer (2) ist ein Zeitglied (13) vorgesehen. An die Schnittstelle (5) ist im Teilnehmer (2) weiterhin ein Modulator (14) angeschlossen, dessen einer Eingang mit einem Taktgeber (15) verbunden ist. Das Zeitglied, z.B. ein retriggerbarer monostabiler Multivibrator, wird durch die Signalflanken bei den Pegelwechseln angestoßen. Die Verzögerungszeit des Zeitgliedes (13) ist auf einen Wert eingestellt, der der Zeitdauer ($t_2$) entspricht. Erfolgt innerhalb der Zeitdauer ($t_2$) kein Wechsel des Pegels auf dem Übertragungskanal (1), dann spricht das Zeitglied (13) an und schaltet den Teilnehmer (2) von der synchronen Übertragung auf asynchrone Übertragung um. Das Vorrangsignal Da das Vorrangsignal (11) auf dem Übertragungskanal für mindestens die Zeitdauer ($t_2$) keinen Pegelwechsel zuläßt, bewirkt das Vorrangsignal (11) eine Unterbrechung der synchronen Übertragung und einen Übergang zur asynchronen Übertragung zwischen den Teilnehmern (2, 3).

Die synchrone Übertragung wird durch den Teilnehmer (2) über den Modulator (14) gesteuert, der u.a. vom Taktgeber (15) gespeist wird. Wenn das Zeitglied (13) anspricht, wird der Taktgeber (15) gesperrt bzw. die Eingabe von Taktsignalen in den Modulator (14) wird gesperrt. Nach dem Ende des asynchronen Übertragungstelegramms wird die synchrone Übertragung über die Freigabe des Modulators (14) für Taktimpulse eingeleitet.

Je nach dem Beginn des Vorrangsignals (11) in bezug auf den Beginn eines synchronen Übertragungstelegramms wird das Vorliegen eines Vorrangsignals (11) nach Ablauf verschieden langer Zeiten erkannt. In Fig. 3 und 4 sind die beiden Extremfälle der Erkennungszeiten dargestellt.

Beginnen sowohl das synchrone Übertragungstelegramm als auch das Vorrangsignal (11) zugleich zum Zeitpunkt ($t_4$), dann kann das Vorliegen einer asynchronen Übertragungsanforderung schon zu einem Zeitpunkt ($t_5$), d.h. nach dem Ende des asynchronen Übertragungstelegramms erkannt werden, wenn danach keinen synchronen Signale mehr ausgesandt werden. Die entsprechende Feststellung ist eine Frage des logischen Aufbaus des Teilnehmers (2), der die zeitliche Aufeinanderfolge der synchronen Übertragungstelegramme kennt und daher nach deren Ende zum Zeitpunkt ($t_5$) auf die asynchrone Übertragung umschalten kann.

Beginnt jedoch das Vorrangsignal (11) zu einem Zeitpunkt ($t_6$), wenn das synchrone Übertragungstelegramm endet, dann wird erst nach Ablauf der Zeitdauer ($t_2$) zu einem Zeitpunkt ($t_7$) eine Erkennung einer asynchronen Übertragungsanforderung möglich.

Der oben erläuterte Mehrfachzugriff zu der seriellen Schnittstelle erlaubt die Verminderung des schaltungstechnischen Aufwands, da die Anzahl der Ein-und Ausgänge gering ist. Vorzugsweise ist hierbei die Möglichkeit gegeben, eine asynchrone Diagnoseschnittstelle und eine synchrone Schnittstelle, die in Fig. 5 mit (5) bezeichnet sind, zu externen Einheiten bei einem Teilnehmer (2) zu realisieren.

Die Schnittstelle (5) arbeitet im Synchronmodus und tastet den Teilnehmer (4) in fest vorgegebenen Zeitintervallen ab. Wenn die asynchrone Schnittstelle aktiviert wird, erkennt dies die Schnittstelle (5) an einer Unterbrechung des synchronen Übertragungstelegramms und/oder an einem Paritätsfehler und kann in den asynchronen Modus übergehen, bei der die Taktsignale für die Übertragung von und zum Teilnehmer (4) unterdrückt werden. Nach dem Ende der asynchronen Übertragung wird wieder auf den Synchronmodus selbsttätig zurückgeschaltet. Das Ende des asynchronen Übertragungstelegramms wird dem Teilnehmer (2) durch den Inhalt des Telegramms mitgeteilt.

Durch die geringe Zahl der Ein-und Ausgänge ergibt sich ein geringer Hardware-Aufwand in den Teilnehmern. Damit läßt sich das System kostengünstig herstellen. Es können unterschiedliche Übertragungsverfahren zwischen den Teilnehmern eingesetzt werden. Im asynchronen Modus ist ein bidirektionaler Betrieb möglich. Die Übertragungsraten können daher stark voneinander abweichen. Das oben beschriebene System eignet sich insbesondere für Bausteine, die für eine intelligente Regelung in der Motor-Peripherie eines Kraftfahrzeugs eingesetzt werden. Es handelt sich dabei z.B. um einen digitalen elektronischen Regler, der durch einen noch weitere Aufgaben ausführenden Prozessor gebildet sein kann, und um Sollwert-bzw. Istwertgeber sowie um Stellglieder.

Wenn ein Vorrangsignal (11) auftritt, wird wenigstens ein teil eines synchronen Übertragungstelegramms verstümmelt. Dies ist bei der fortlaufenden Übertragung von Meßwerten des gleichen Meßwertgebers nicht kritisch, da fehlerhafte Meßwerte nicht beachtet und durch spätere Meßwerte ersetzt werden.

## Ansprüche

1. Verfahren zur digitalen Übertragung von Informationen zwischen selbständigen Teilnehmern eines Systems über eine serielle Schnittstelle (5) mindestens eines Teilnehmers (2),
**dadurch gekennzeichnet,**
daß ein Teilnehmer (3), dem ein Vorrang vor anderen Teilnehmern (4) zugeordnet ist, für den Zugriff zu der Schnittstelle (5) ein Vorrangsignal (11) ausgibt, das einen von zwei Pegeln (7, 8), denen jeweils eine der beiden binären Wertigkeiten zugeordnet ist, an der Schnittstelle (5) für eine Zeitdauer ($t_3$) erzeugt, die gleich lang oder länger als eine Zeitdauer ($t_2$) zwischen zwei definierten Signalpegeln ist, die je in gesonderten aufeinanderfolgenden Übertragungen zwischen den anderen Teilnehmern (2, 4) auftreten.

2. Verfahren nach Anspruch 1,
**dadurch gekennzeichnet,**
daß die Übertragung zwischen dem oder den nicht dem Vorrang zugeordneten Teilnehmern (4) zu der seriellen Schnittstelle (5) synchron in Telegrammen oder Datenblöcken erfolgt, die jeweils mindestens einen Wechsel der den binären Wertigkeiten zugeordneten Pegel aufweisen.

3. Verfahren nach Anspruch 1 oder 2,
**dadurch gekennzeichnet,**
daß die Telegramme oder Datenblöcke mindestens ein ungeradzahliges Paritätsbit enthalten.

4. Verfahren nach einem der vorhergehenden Ansprüche,
**dadurch gekennzeichnet,**
daß der Teilnehmer (3), dem der Vorrang zugeordnet ist, asynchrone Datentelegramme über die serielle Schnittstelle (5) empfängt oder an diese sendet.

5. Schaltungsanordnung zur Durchführung des Verfahrens nach einem der vorhergehenden Ansprüche,
**dadurch gekennzeichnet,**
daß die Schnittstelle (5) oder ein mit dieser verbundener Teilnehmer (2) ein von Wechseln der Pegel, die den beiden binären Wertigkeiten zugeordnet sind, anstoßbares Zeitglied (13) enthält, das nach Ablauf einer einstellbaren Zeitdauer ($t_3$) anspricht und den Teilnehmer (2) auf die Verbindung mit demjenigen Teilnehmer (3) umschaltet, dem der Vorrang zugeordnet ist.

6. Schaltungsanordnung nach Anspruch 5,
**dadurch gekennzeichnet,**
daß der mit der seriellen Schnittstelle (5) verbundene Teilnehmer (2) nach Beendigung der Datenübertragung mit demjenigen Teilnehmer (3), dem der Vorrang zugeordnet ist, selbsttätig auf die Datenübertragung mit mindestens einem anderen Teilnehmer (4) umschaltbar ist.

7. Schaltungsanordnung nach Anspruch 5 oder 6,
**dadurch gekennzeichnet,**
daß dem Vorrangsignal (11) ein aktiver Pegel (7) zugeordnet ist.

8. Schaltungsanordnung nach einem der vorhergehenden Ansprüche 5 bis 7,
**dadurch gekennzeichnet,**
daß ohne Datenübertragung an der seriellen Schnittstelle (5) ein passiver Pegel herrscht.

9. Schaltungsanordnung nach einem der vorhergehenden Ansprüche 5 bis 8,
**dadurch gekennzeichnet,**
daß die synchron übertragenen Telegramme oder Datenblöcke bei einer Dauer ($t_1$), die kleiner als die vorgesehene Dauer ($t_2$) zwischen aufeinanderfolgenden Telegrammen oder Datenblöcken ist, nach Ablauf der Dauer ($t_2$) in Verbindung mit einem Vorrangsignal (11) die Umschaltung der Schnittstelle (5) bzw. des an diese angeschlossenen Teilnehmers (2) auf denjenigen Teilnehmer (3) veranlassen, dem der Vorrang zugeordnet ist.

10. Schaltungsanordnung nach einem der vorhergehenden Ansprüche 5 bis 9,
**dadurch gekennzeichnet,**
daß an die serielle Schnittstelle (5) ein Regler für die Motorregelung eines Kraftfahrzeuges angeschlossen ist, der über die Schnittstelle (5) mit einem Gerät zur Diagnose verbindbar ist.

FIG.1

FIG.2

FIG.3

FIG.4

FIG.5